# FASCICULE DE BREVET EUROPEEN

(11) **EP 3 271 901 B1**
(45) Date de publication et mention de la délivrance du brevet: **02.09.2020**
(21) Numéro de dépôt: 15828364.8
(22) Date de dépôt: 22.12.2015
(51) Int. Cl.: G07C 9/00

(54) **UNITÉ ÉLECTRONIQUE, PROCÉDÉ MIS EN OEUVRE DANS UNE TELLE UNITÉ ÉLECTRONIQUE, PROCÉDÉ DE PARTAGE D'UNE BASE DE TEMPS ENTRE UN SERVEUR ET UNE UNITÉ ÉLECTRONIQUE, ET PROCÉDÉ DE SYNCHRONISATION D'UN SERVEUR ET D'UNE UNITÉ ÉLECTRONIQUE**
ELEKTRONIKEINHEIT, IN EINER ELEKTRONIKEINHEIT DIESES TYPS AUSGEFÜHRTES VERFAHREN ZUR GEMEINSAMEN NUTZUNG EINES ZEITRAHMENS ZWISCHEN EINEM SERVER UND EINER ELEKTRONIKEINHEIT UND VERFAHREN ZUR SYNCHRONISIERUNG EINES SERVERS UND EINE ELEKTRONIKEINHEIT
ELECTRONICS UNIT, METHOD CARRIED OUT IN AN ELECTRONICS UNIT OF SAID TYPE, METHOD FOR SHARING A TIME FRAME BETWEEN A SERVER AND AN ELECTRONICS UNIT, AND METHOD FOR SYNCHRONIZING A SERVER AND AN ELECTRONICS UNIT

(30) Priorité: 30.12.2014 FR 1463431
(43) Date de publication de la demande: 24.01.2018
(73) Titulaire: Valeo Comfort and Driving Assistance, 94046 Créteil Cedex (FR)
(72) Inventeur: MENARD, Eric, 94046 Créteil Cedex (FR); BENTEO, Bruno, 94046 Créteil Cedex (FR); CHALOCHET, Aymeric, 94046 Créteil Cedex (FR)
(74) Mandataire: Delplanque, Arnaud
(86) Numéro de dépôt international: PCT/FR2015/053716
(87) Numéro de publication internationale: WO 2016/108011

(56) Documents cités:
- EP-A1- 1 271 418
- EP-A1- 2 743 868
- US-A1- 2014 129 113

## Description

### DOMAINE TECHNIQUE AUQUEL SE RAPPORTE L'INVENTION

La présente invention concerne la commande de fonctionnalités d'un véhicule au moyen d'un terminal utilisateur, tel qu'un téléphone portable.

Elle concerne plus particulièrement une unité électronique, un procédé mis en œuvre dans une telle unité électronique, un procédé de partage d'une base de temps entre un serveur et une unité électronique, et un procédé de synchronisation d'un serveur et d'une unité électronique.

L'invention s'applique particulièrement avantageusement dans le cas où la fonctionnalité commandée est le déverrouillage des portes du véhicule.

### ARRIERE-PLAN TECHNOLOGIQUE

On a proposé de commander certaines fonctionnalités d'un véhicule automobile, telles que le déverrouillage des portes du véhicule, au moyen d'un terminal utilisateur, par exemple un téléphone portable couramment utilisé par l'utilisateur du véhicule.

Afin de ne permettre cette commande qu'aux personnes effectivement autorisées, on utilise une clé virtuelle mémorisée dans le terminal utilisateur et dont une unité électronique de commande du véhicule vérifie la validité avant de commander le déverrouillage des portes.

Dans certains cas, comme par exemple dans le cadre de la location de véhicules, il peut être souhaitable en outre que cette possibilité de commander la fonctionnalité au moyen du terminal utilisateur soit limitée dans le temps.

EP2743868 divulgue un système et procédé pour la création, distribution et utilisation de clés de véhicule virtuelles. Les clés son générées en se basant sur des tokens uniques associés au véhicule et qui ne peuvent être utilisés qu'une seule fois pour déverrouiller le véhicule.

### OBJET DE L'INVENTION

Dans ce contexte, la présente invention propose une unité électronique selon la revendication 1.

On utilise ainsi un compteur dédié pour limiter dans le temps les possibilités de commander la fonctionnalité au moyen du terminal utilisateur. Un tel compteur peut être diversifié, c'est-à-dire différent d'un véhicule à l'autre, puisqu'il est initialisé avec une valeur propre et modifié avec une période propre, mémorisée dans l'unité électronique. Un tel compteur est donc plus difficile à falsifier qu'une base de temps classique, telle que l'horloge du véhicule.

Les moyens pour modifier périodiquement la valeur du compteur et les moyens de commande peuvent être mis en œuvre en pratique par un processeur et par des instructions adaptées de programme d'ordinateur, mémorisées dans une mémoire associée au processeur. En variante, ces moyens pourraient être mis en œuvre par un circuit électronique dédié, par exemple un circuit intégré à application spécifique, couramment dénommé ASIC (pour *"Application Specific Integrated Circuit").*

D'autres caractéristiques proposées à titre optionnel, et donc non limitatif, sont les suivantes :
- l'unité électronique comprend des moyens de réception d'une borne inférieure et d'une borne supérieure et la plage de valeurs donnée est définie entre ladite borne inférieure et ladite borne supérieure ;
- l'unité électronique comprend des moyens de dérivation d'une clé virtuelle sur la base d'une clé racine et des bornes inférieure et supérieure reçues ;
- l'unité électronique comprend des moyens d'émission d'un défi à destination du terminal utilisateur, des moyens de calcul d'une réponse attendue en fonction de la clé virtuelle et du défi et des moyens de réception d'une réponse en provenance du terminal utilisateur ;
- les moyens de commande sont conçus pour commander ladite fonctionnalité seulement lorsque la réponse reçue correspond à la réponse attendue ;
- la modification périodique du compteur est une incrémentation périodique du compteur ;
- ladite fonctionnalité est le déverrouillage des portes du véhicule et/ou le démarrage du véhicule.

La fonctionnalité peut également être le verrouillage des portes du véhicule, ou le verrouillage ou déverrouillage du coffre du véhicule, ou bien le verrouillage ou déverrouillage de la boîte à gant du véhicule, ou encore le démarrage ou l'arrêt du moteur du véhicule.

L'invention propose également un procédé selon la revendication 7 mis en œuvre dans une unité électronique telle que proposée ci-dessus.

On peut prévoir par ailleurs que l'initialisation du compteur soit réalisée seulement en cas de détection d'une action d'un utilisateur sur un objet physique lié au véhicule (par exemple une clé physique du véhicule ou une commande manuelle du véhicule).

L'invention propose aussi un procédé de partage d'une base de temps entre un serveur et une unité électronique telle que proposée ci-dessus selon la revendication 9.

L'invention propose en outre un procédé de synchronisation d'un serveur et d'une unité électronique telle que présentée ci-dessus selon la revendication 10.

Selon une variante envisageable, un tel procédé de synchronisation d'un serveur et d'une unité électronique telle que présentée ci-dessus comprend les étapes selon la revendiation 11.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente un exemple de contexte dans lequel peut-être mise en œuvre l'invention, comprenant notamment un véhicule et un terminal utilisateur ;
- la figure 2 représente schématiquement des composants, utiles à la compréhension de l'invention, du véhicule et du terminal utilisateur de la figure 1 ;
- la figure 3 présente les étapes principales d'un procédé d'inscription à un service de commande de fonctionnalités du véhicule au moyen du terminal utilisateur ;
- la figure 4 présente les étapes principales d'un exemple de procédé de commande d'une fonctionnalité du véhicule au moyen du terminal utilisateur ; et
- la figure 5 présente les étapes principales d'un exemple de procédé de resynchronisation d'un compteur.

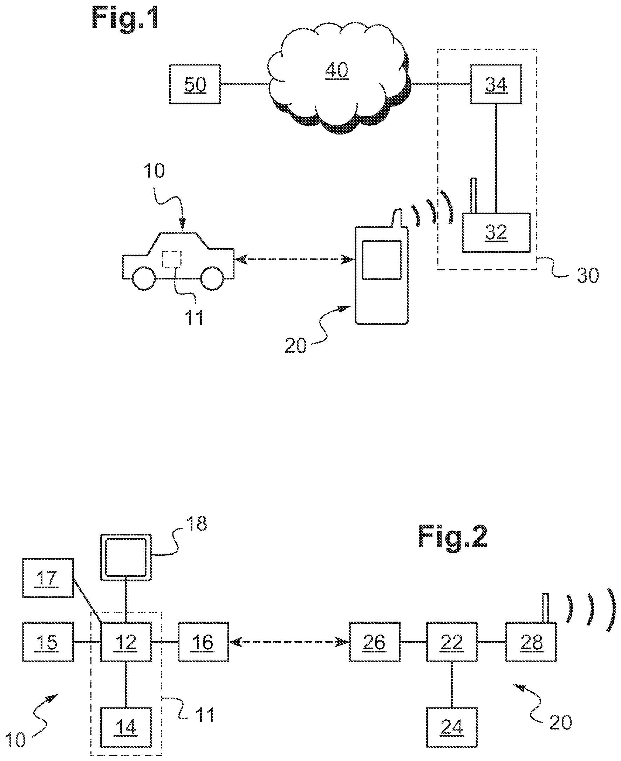

La figure 1 représente un exemple de contexte dans lequel peut être mise en œuvre l'invention.

Dans ce contexte, un véhicule 10 comprend une unité électronique de commande 11 (ou ECU pour *"Electronic Control Unit"*) qui peut entrer en communication via une liaison sans fil avec un terminal utilisateur 20, par exemple un téléphone portable (ou téléphone cellulaire), éventuellement de type *"téléphone intelligent'* ou *"smartphone"* selon la dénomination anglo-saxonne couramment utilisée, afin d'échanger des données avec ce terminal utilisateur 20, par exemple en vue de la commande de fonctionnalités du véhicule 10 au moyen du terminal utilisateur 20 (une telle fonctionnalité pouvant être par exemple le déverrouillage des portes du véhicule 10), comme expliqué plus bas.

La liaison sans fil utilisée pour communiquer entre l'unité électronique de commande 11 et le terminal utilisateur 20 est par exemple de type Bluetooth.

Le terminal utilisateur 20 est par ailleurs conçu pour se connecter à un réseau de téléphonie mobile 30 qui comprend notamment une station de base 32 en communication via une liaison radio avec le terminal utilisateur 20 et une passerelle 34 de connexion à un réseau public 40, par exemple le réseau Internet.

Un serveur 50 est également connecté au réseau public 40 de sorte que le terminal utilisateur 20 et le serveur 50 peuvent entrer en communication et échanger des données via le réseau de téléphonie mobile 30 et le réseau public 40. Le serveur 50 est ici géré par le fabricant de l'unité électronique de commande 11.

La figure 2 représente schématiquement des composants, utiles à la compréhension de l'invention, du véhicule 10 et du terminal utilisateur 20.

Le véhicule 10 comprend notamment l'unité électronique de commande 11 déjà mentionnée, un actionneur 15 (conçu ici pour permettre le déverrouillage des portes du véhicule 10), un actionneur 17 (conçu pour permettre le démarrage du véhicule), un module de communication sans fil 16 et une interface utilisateur 18.

Un numéro d'identification VIN (pour *"Vehicle Identification Number"*) est attribué au véhicule 10 et un numéro de série N est attribué à l'unité électronique de commande 11. L'association entre le numéro d'identification VIN d'un véhicule 10 et le numéro de série N de l'unité électronique de commande 11 qui équipe ce véhicule 10 est conservée dans une base de données D gérée par le serveur 50 (qui peut être le constructeur du véhicule 10 ou un fournisseur).

L'unité électronique de commande comprend un processeur 12 et une unité de mémorisation 14, par exemple une mémoire non-volatile réinscriptible ou un disque dur.

L'unité de mémorisation 14 mémorise notamment des programmes d'ordinateur comprenant des instructions dont l'exécution par le processeur 12 permet la mise en œuvre par l'unité électronique de commande 11 des procédés décrits ci-dessous.

L'unité de mémorisation 14 mémorise également des données utilisées dans le cadre des procédés décrits ci-dessous, notamment une clé cryptographique PrK (par exemple une clé privée) et une clé racine (ou clé maître) MK, utilisées comme expliqué dans la suite.

La clé cryptographique PrK et/ou la clé racine MK sont par exemple écrites dans l'unité de mémorisation 14 lors de la fabrication de l'unité électronique de commande 11, avant montage de cette unité électronique de commande 11 dans le véhicule 10.

La clé cryptographique PrK et la clé racine MK sont également mémorisées au niveau du serveur 50 (dont on rappelle qu'il est géré par le fabricant de l'unité électronique de commande 11), en association avec le numéro de série N de l'unité électronique de commande 11.

L'unité de mémorisation 14 mémorise en outre des informations de construction d'un compteur diversifié, par exemple une valeur initiale I du compteur et une durée de pas P. Ces informations peuvent elles aussi être écrites dans l'unité de mémorisation 14 lors de la fabrication de l'unité électronique de commande 11, avant montage de cette unité électronique de commande 11 dans le véhicule 10, et mémorisées par ailleurs au niveau du serveur 50, en association avec le numéro de série N de l'unité électronique de commande 11.

Ce compteur est diversifié dans le sens où les informations de construction du compteur (ici la valeur initiale I et la durée du pas P) diffèrent d'une unité électronique de commande à l'autre, et donc d'un véhicule à l'autre. Autrement dit, chaque unité électronique de commande (et donc chaque véhicule) mémorise des informations de construction du compteur qui lui sont propres. Le serveur S mémorise ainsi, comme déjà indiqué, ces informations de construction du compteur en association avec chaque numéro de série d'unité électronique de commande.

Le terminal utilisateur 20 comprend un processeur 22, une mémoire 24 (par exemple une mémoire non-volatile réinscriptible), un module de communication sans fil 26 et un module 28 de communication sur le réseau de téléphonie mobile 30.

Le module de communication sans fil 26 du terminal utilisateur 20 permet d'établir une liaison sans fil (ici de type Bluetooth comme déjà indiqué) avec le module de communication sans fil 16 du véhicule 10 à travers laquelle le processeur 12 de l'unité électronique de commande 11 et le processeur 22 du terminal utilisateur 20 peuvent échanger des données, notamment comme exposé plus loin.

Le module de communication 28 permet au terminal utilisateur 20 (et précisément au processeur 22 équipant ce terminal utilisateur 20) d'échanger comme déjà indiqué des données avec d'autres dispositifs connectés au réseau de téléphonie mobile 30 ou au réseau public 40, notamment avec le serveur 50. Dans certains modes de réalisation, le module de communication peut comprendre une carte à puce qui mémorise des données de connexion associées à un abonnement au service de téléphonie mobile et permettant d'établir la connexion sur le réseau de téléphonie mobile 30.

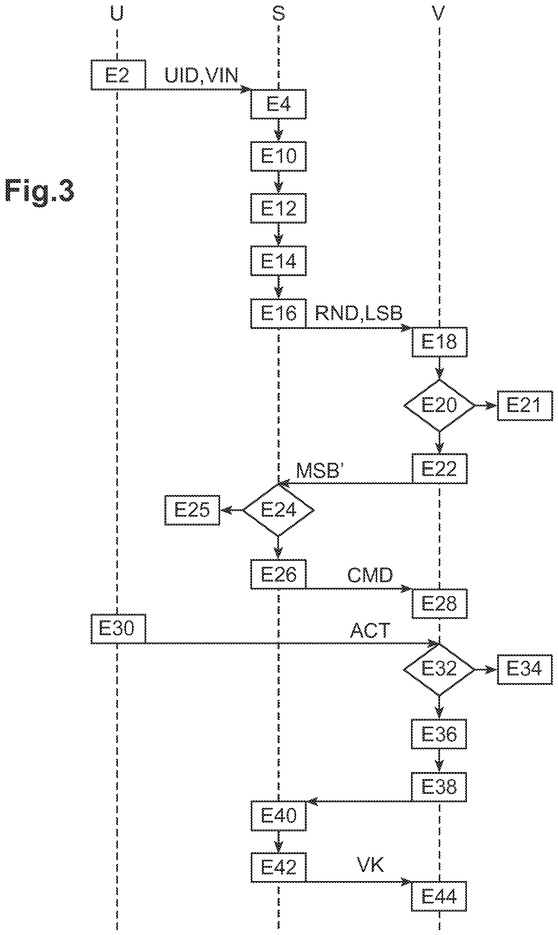

La figure 3 présente les étapes principales d'un procédé d'inscription (ou enrôlement) à un service de commande de fonctionnalités du véhicule 10 au moyen du terminal utilisateur 20.

On remarque qu'avant la mise en œuvre d'un tel procédé, le terminal utilisateur 20 n'est pas spécifiquement préparé pour la commande de fonctionnalités du véhicule 10 et ne comprend aucune donnée associée avec le véhicule 10. Il peut donc s'agir par exemple du téléphone portable couramment utilisé par le propriétaire du véhicule 10.

De même, avant la mise en œuvre du procédé, le terminal utilisateur 20 est inconnu du véhicule 10 qui n'a donc connaissance d'aucune donnée associée à ce terminal utilisateur 20.

On considère que, pour la mise en œuvre du procédé de la figure 3, un utilisateur U (ici, une personne chargée de la mise en service du véhicule 10) a accès au véhicule 10 (également référencé V en figure 3) par des moyens classiques (par exemple une clé physique).

Dans le mode de réalisation décrit ici, l'utilisateur U porte et utilise le terminal utilisateur 20 qui, comme décrit ci-dessus, est en communication d'une part avec l'unité électronique de commande 11 via une liaison sans fil (par exemple de type Bluetooth) et d'autre part avec le serveur 50 (référencé S en figure 3) via une liaison radio jusqu'à la station de base 31, puis via le réseau de téléphonie mobile 30 et le réseau public 40.

Le terminal utilisateur 20 peut ainsi être utilisé, dans le mode de réalisation décrit ici, en tant que passerelle permettant un échange de données entre le véhicule V (précisément l'unité électronique de commande 11) et le serveur S, comme décrit ci-après.

En variante, on pourrait utiliser d'autres moyens de communication entre le véhicule V (*i.e*. l'unité électronique de commande 11) et le serveur S, par exemple un module de communication équipant le véhicule V et conçu pour établir une communication (directe) entre le véhicule V et le réseau de téléphonie mobile 30.

Le procédé de la figure 3 débute à l'étape E2 à laquelle l'utilisateur U communique au serveur S (référencé 50 en figure 1) un identifiant utilisateur UID et un identifiant VIN du véhicule V (référencé 10 en figure 1). Dans un mode de réalisation envisageable, l'utilisateur U se connecte pour ce faire au serveur S (par exemple en saisissant l'adresse http du serveur S dans un navigateur exécuté par le processeur 22 du terminal utilisateur 20) et saisit par exemple les identifiants précités UID, VIN dans un formulaire ensuite transmis au serveur S. Dans un autre mode de réalisation envisageable, une application préalablement installée sur le terminal utilisateur 20 demande à l'utilisateur U la saisie des identifiants et les transmet au serveur 50.

L'identifiant utilisateur UID comprend par exemple la dénomination de la société qui offrira le véhicule à la location. On pourrait toutefois utiliser en variante un autre type de donnée pour identifier l'utilisateur ; ainsi, l'identifiant utilisateur pourrait être une adresse électronique, un numéro de téléphone (par exemple le numéro attribué à l'abonnement au service de téléphonie mobile, tel qu'un numéro MSISDN) ou un identifiant du terminal utilisateur de l'utilisateur U (tel qu'un numéro IMEI).

L'identifiant VIN du véhicule est par exemple de type *"Vehicle Identification Number".*

Le serveur S reçoit l'identifiant utilisateur U et l'identifiant véhicule VIN à l'étape E4 et mémorise ces identifiants, à cette étape dans une zone dédiée aux véhicules pour lesquels l'inscription au service de commande de fonctionnalités du véhicule au moyen du terminal utilisateur est en cours.

Le numéro de série N de l'unité électronique de commande 11 est par exemple communiqué par l'utilisateur U au serveur S, par exemple lors de l'étape E2. Pour ce faire, le numéro de série N est fourni au préalable à l'utilisateur : il est par exemple imprimé sur une étiquette collée dans le manuel d'utilisation du véhicule et/ou accessible par l'utilisateur au moyen de l'interface utilisateur 18.

Le serveur S peut ainsi déterminer à l'étape E10 la clé cryptographique PrK mémorisée (comme décrit ci-dessus) en association avec ce numéro de série N.

Le serveur S génère alors un défi (en anglais *"challenge"*), par exemple nombre aléatoire RND (étape E12).

Le serveur S calcule alors à l'étape E14 une réponse RESP associée à ce défi par application d'une fonction cryptographique f utilisant la clé cryptographique PrK, ce que l'on peut écrire : RESP = f(RND,PrK).

Le serveur S peut ainsi émettre à l'étape E16 le défi RND et une partie de la réponse RESP, ici un mot de poids faible LSB (pour *"Least Significant Byte")* formant partie de la réponse RESP, à destination du véhicule V, précisément de l'unité électronique de commande 11.

On rappelle comme déjà indiqué que le serveur S (référencé 50 en figure 1) communique ici avec l'unité électronique de commande 11 par l'intermédiaire du terminal utilisateur 20.

L'unité électronique de commande 11 reçoit le défi RND et la partie de réponse LSB et calcule à son tour à l'étape E18 la réponse attendue RESP' par application au défi RND reçu de la fonction cryptographique f utilisant la clé cryptographique PrK mémorisée comme indiqué plus haut dans l'unité de mémorisation 14 : RESP' = f(RND,PrK).

L'unité électronique de commande 11 vérifie alors à l'étape E20 que la partie LSB' (correspondant à la partie de la réponse RESP reçue, ici le mot de poids faible) de la réponse RESP' calculée à l'étape E18 est bien égale à la partie de réponse LSB reçue en provenance du serveur S.

Si cette égalité n'est pas vérifiée, l'unité électronique de commande 11 procède à l'étape E21 qui met fin au processus d'inscription. En effet, cela signifie que la clé cryptographique utilisée dans le calcul de l'étape E14 diffère de celle utilisée dans le calcul de l'étape E18 et qu'une erreur s'est donc produite (par exemple du fait de l'envoi d'un identifiant véhicule erroné à l'étape E2). Un message d'erreur peut alors par exemple être affiché sur l'interface utilisateur 18 du véhicule V.

Si l'égalité est vérifiée, l'unité électronique de commande 11 émet à l'étape E22 une autre partie de la réponse RESP' calculée à l'étape E18, ici un mot de poids fort MSB' (pour "*Most Significant Byte*")*,* à destination du serveur S.

Le serveur S reçoit cette autre partie MSB' de la réponse RESP' et vérifie à l'étape E24 que la partie MSB (correspondant à la partie MSB' de la réponse RESP' reçue, ici le mot de poids fort) de la réponse RESP calculée à l'étape E14 est bien égale à la partie de réponse MSB' reçue en provenance de l'unité électronique de commande 11.

Si cette égalité n'est pas vérifiée, le serveur procède à l'étape E25 qui met fin au processeur d'inscription. En effet, cela signifie que le partenaire du serveur S dans la communication n'a pas été en mesure de calculer la réponse attendue, vraisemblablement du fait que le partenaire n'est pas le véhicule attendu et ne détient donc pas la clé cryptographique PrK.

En fonctionnement normal, l'égalité est vérifiée et une authentification mutuelle a ainsi été réalisée entre le serveur S et l'unité électronique de commande 11.

Le serveur S déclenche alors la poursuite du procédé d'inscription en émettant à destination de l'unité électronique de commande 11 une commande CMD de vérification de la présence de l'utilisateur U dans le véhicule V (étape E26).

À réception de la commande CMD, l'unité électronique de commande 11 commande à l'étape E28 la génération par l'interface utilisateur 18 d'une indication demandant à l'utilisateur U d'effectuer une ou plusieurs action(s) ACT.

Cette indication peut être une indication visuelle (par exemple un signal lumineux ou un affichage sur un écran de l'interface utilisateur 18) et/ou sonore (par exemple un son particulier ou un message vocal). L'action ou les actions demandée(s) peu(ven)t comprendre l'utilisation de la clé physique (par exemple l'appui, éventuellement simultané, sur un ou plusieurs boutons de la clé physique, ou le démarrage et/ou l'arrêt du moteur avec la clé physique) et/ou une action de l'utilisateur U sur le véhicule V, par exemple un appui sur un bouton de l'interface utilisateur 18, une ouverture et/ou une fermeture de porte, et/ou un démarrage et/ou un arrêt du moteur.

L'utilisateur effectue l'action (ou les actions) demandée(s) ACT à l'étape E30.

L'unité électronique de commande 11 détecte à l'étape E32 si l'action effectuée par l'utilisateur U correspond bien à l'action demandée ACT (en laissant par exemple une durée prédéterminée à l'utilisateur pour accomplir l'action).

En cas d'échec (c'est-à-dire si l'utilisateur U n'effectue pas les actions demandées dans le laps de temps imparti), l'unité électronique de commande 11 procède à l'étape E34 qui met fin au processus d'inscription. Un message d'erreur peut en outre être affiché sur l'interface utilisateur 18 du véhicule V.

En revanche, si l'utilisateur effectue correctement les actions demandées ACT dans le temps imparti, on considère que toutes les conditions requises pour effectuer l'inscription sont remplies et que le service de commande de fonctionnalités du véhicule au moyen du terminal utilisateur peut être lancé.

On remarque qu'il est possible d'envisager d'autres conditions de validation de l'inscription, par exemple la saisie au niveau de l'interface utilisateur 18 du véhicule 10 d'un code à usage unique reçu et affiché par le terminal utilisateur 20. Un tel code à usage unique peut être émis par le serveur 50, à destination du terminal utilisateur 20, via le réseau public 40, par exemple lors de l'exécution de l'application permettant, dans certains modes de réalisation, la saisie des identifiants à l'étape E2, comme indiqué ci-dessus. En variante, le code à usage unique pourrait être transmis (par exemple sous forme de message court ou SMS, pour *"Short Message System"*) au terminal utilisateur 20 en utilisant le numéro de téléphone (numéro MSISDN) associé à l'abonnement utilisé par le terminal utilisateur 20, en particulier lorsque ce numéro forme l'identifiant utilisateur, comme également envisagé ci-dessus. Dans ce dernier cas, le serveur 50 est conçu pour émettre des données sur le réseau téléphonique.

On procède alors au lancement d'un compteur au sein de l'unité électronique de commande 11, en utilisant les informations de construction mémorisées dans l'unité de mémorisation 14 comme déjà indiqué : dans le mode de réalisation décrit ici, le compteur est initialisé à la valeur initiale I et incrémenté périodiquement avec la période P (étape E36). Lorsque le compteur est mémorisé sur un nombre de bits donné, il est remis à zéro lors d'une incrémentation entraînant un dépassement (ou *"overflow"* selon la dénomination anglo-saxonne parfois utilisée) de la valeur maximale (déterminée par le nombre de bits du compteur).

L'unité électronique de commande 11 émet par ailleurs à destination du serveur S un message indiquant que la présence de l'utilisateur a été détectée (par les actions ACT qu'il a effectuées à la demande de l'unité électronique de commande 11) et que le service peut donc être lancé (étape E38).

Le serveur S reçoit ce message et lance également le compteur en son sein (étape E40), en association avec l'identifiant véhicule VIN et sur la base des informations de construction mémorisées en association avec le numéro de série N de l'entité électronique de commande 11, ici la valeur initiale I et la période P d'incrémentation du compteur.

Le compteur évolue donc en parallèle au sein de l'unité de commande 11 et au sein du serveur S, avec éventuellement un très faible décalage entre le compteur mémorisé dans l'unité électronique de commande 11 et le compteur mémorisé dans le serveur 50 (dû notamment à la courte durée séparant les étapes E36 et E40), ce qui n'est toutefois pas préjudiciable.

Le serveur S peut alors décider de l'inscription définitive au service et mémorise pour ce faire en association, dans une zone de mémorisation des souscripteurs du service, l'identifiant utilisateur UID, l'identifiant véhicule VID et, dans le cas où un compteur est utilisé, la valeur courante du compteur (qui sera incrémentée périodiquement avec la période P), ainsi qu'éventuellement le numéro de série N (étape E42). L'identifiant utilisateur UID et l'identifiant véhicule VID mémorisés en association peuvent être considérés comme un certificat électronique de propriété du véhicule pour le service proposé.

Le serveur S peut alors communiquer à l'utilisateur U des droits d'accès au service de commande des fonctionnalités du véhicule, par exemple en transmettant au terminal utilisateur 20 une clé virtuelle VK autorisant le terminal utilisateur 20 à commander ces fonctionnalités (e.g. l'ouverture des portes du véhicule), comme dans les exemples présentés ci-dessous. La clé virtuelle VK est mémorisée dans le terminal utilisateur 20 (étape E44). En pratique, la clé virtuelle VK peut être transmise du serveur 50 à une application préalablement téléchargée dans la mémoire 24 du terminal utilisateur 20 et exécutable par le processeur 22 du terminal utilisateur 20, par exemple l'application permettant la mise en œuvre de l'étape E2 comme envisagé ci-dessus. En variante, la clé virtuelle VK pourrait être transmise au terminal utilisateur 20 en utilisant le numéro de téléphone (numéro MSISDN) associé à l'abonnement utilisé par le terminal utilisateur 20, en particulier lorsque ce numéro forme l'identifiant utilisateur, comme également envisagé ci-dessus.

Dans le mode de réalisation décrit ici, la clé virtuelle VK est par exemple une clé temporaire, construite comme décrit ci-dessous, permettant au personnel de la société de location de véhicules d'avoir accès au véhicule en attendant que ce véhicule soit effectivement loué.

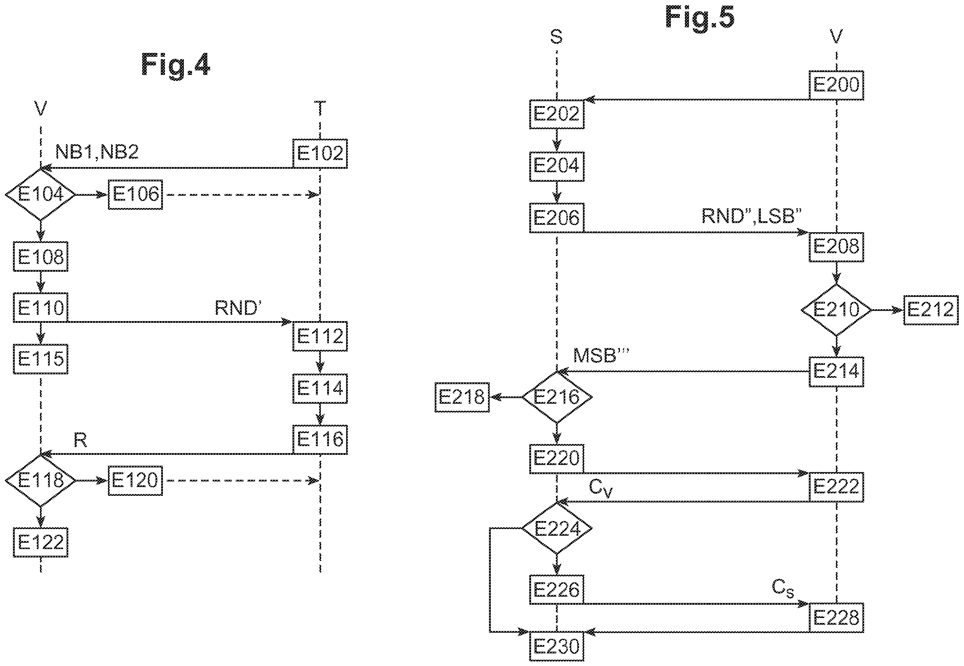

La figure 4 présente les étapes principales d'un exemple de procédé de commande d'une fonctionnalité du véhicule V (référencé 10 en figure 1) au moyen du terminal utilisateur T (du type de celui référencé 20 en figure 1).

D'autres étapes que celles décrites ci-dessous peuvent naturellement être mises en œuvre en pratique, en particulier au préalable afin d'établir un canal de communication entre l'unité électronique de commande 11 du véhicule 10 et le terminal utilisateur 20.

Le procédé de commande décrit ici est particulièrement bien adapté au cas où le véhicule V est loué à un utilisateur pour une période de temps prédéfinie.

On utilise pour ce faire une clé virtuelle VK temporaire, dérivée en prenant en compte la valeur NB1 du compteur (installé en parallèle dans l'unité électronique de commande 11 du véhicule V et dans le serveur S comme indiqué ci-dessus) au début de la période de location et la valeur NB2 du compteur en fin de période de location.

Afin de générer la clé virtuelle VK, le serveur S reçoit par exemple du loueur de véhicule l'identifiant véhicule VIN, l'heure de début de location et l'heure de fin de location et détermine, sur la base des informations de construction de compteur lues dans l'unité de mémorisation 14, la valeur NB1 du compteur mis en place dans l'unité électronique de commande 11 concernée (dont le numéro de série N est associé à l'identifiant véhicule VIN reçu, suite par exemple au procédé de la figure 3) et correspondant à l'heure de début de location, et la valeur NB2 de ce compteur correspondant à l'heure de fin de location.

La clé virtuelle VK est alors générée en utilisant la clé racine MK (mémorisée comme indiqué ci-dessus en association avec le numéro de série N), la valeur de début NB1 et la valeur de fin NB2, par exemple par application d'une fonction de dérivation g à ces éléments : VK = g(MK,NB1,NB2).

Le serveur S transmet alors la clé virtuelle VK et les valeurs NB1, NB2 au terminal usuel T (par exemple un téléphone portable) de l'utilisateur (locataire du véhicule), par exemple après une étape de vérification que ce terminal usuel T est bien éligible au service (sur la base d'un identifiant du terminal, tel qu'un numéro IMEI, et/ou d'un numéro d'abonné associé au terminal, tel qu'un numéro MSISDN) ; la clé virtuelle VK et les valeurs NB1, NB2 sont alors mémorisées au sein du terminal T. (On remarque que le terminal T utilisé ici n'est donc pas généralement celui utilisé dans le cadre de la figure 3.)

On peut alors procéder à la commande de fonctionnalité du véhicule V au moyen du terminal T.

Pour ce faire, le terminal T émet à l'étape E102 une requête de mise en œuvre de la fonctionnalité, accompagnée de la valeur de début NB1 et de la valeur de fin NB2, à destination de l'unité électronique de commande 11 du véhicule V (étape E102).

L'unité électronique de commande 11 vérifie alors à l'étape E104 que la valeur courante du compteur qu'elle met en œuvre est bien comprise entre la valeur NB1 et la valeur NB2 (ce qui signifie, d'après la construction décrite ci-dessus des valeurs NB1 et NB2, que l'instant courant est compris dans la période de location).

Dans la négative, l'unité électronique de commande 11 met fin au procédé à l'étape E106 sans effectuer la fonctionnalité requise (c'est-à-dire ici sans déverrouiller les portes du véhicule V). Un message d'échec peut éventuellement être transmis au terminal T pour affichage sur le terminal T d'une indication correspondante.

En cas de vérification positive à l'étape E104, le procédé se poursuit à l'étape E108 à laquelle l'unité électronique de commande 11 calcule la clé virtuelle VK sur la base de la clé racine MK (mémorisée comme indiqué ci-dessus dans l'unité de mémorisation 14), la valeur de début NB1 et la valeur de fin NB2, selon le même calcul que celui effectué comme indiqué ci-dessus au sein du serveur S, ici par application de la fonction de dérivation g à ces éléments : l'unité électronique de commande 11 calcule dans ce cas VK = g(MK,NB1,NB2).

L'unité électronique de commande 11 génère alors à l'étape E110 un défi, par exemple un nombre aléatoire RND', et émet ce défi à destination du terminal utilisateur T.

Le terminal utilisateur T reçoit ce défi à l'étape E112.

À l'étape E114, le terminal utilisateur T (c'est-à-dire en pratique son processeur) applique au défi reçu RND' une fonction cryptographique h utilisant la clé virtuelle VK (reçue du serveur S au préalable comme indiqué ci-dessus) et obtient ainsi une réponse R : R = h(RND',VK). D'autres données peuvent éventuellement être utilisées dans les calculs effectués à cette étape, par exemple l'identifiant véhicule VIN.

En parallèle, l'unité électronique de commande effectue à l'étape E115 un calcul identique (en fonctionnement normal) afin d'obtenir de son côté la réponse attendue ; on note ici R' le résultat de ce calcul : R' = h(RND',VK).

Le terminal utilisateur T émet la réponse attendue R (calculée à l'étape E114) à destination de l'unité électronique de commande 11 (étape E116).

L'unité électronique de commande 11 vérifie alors à l'étape E118 que la réponse R reçue du terminal utilisateur T est bien égale à la réponse attendue R', auquel l'unité électronique de commande 11 peut considérer que le terminal utilisateur T détient bien la clé virtuelle VK qui donne un droit d'accès au véhicule.

En cas d'échec de la vérification à l'étape E118 (ce qui n'est pas le cas dans le fonctionnement normal décrit ci-dessus, mais peut-être le cas lorsqu'une personne malintentionnée tente d'accéder au véhicule sans connaître la clé virtuelle VK), l'unité électronique de commande 120 met fin au procédé à l'étape E120 sans effectuer la fonctionnalité requise (c'est-à-dire ici sans déverrouiller les portes du véhicule V). Un message d'échec peut éventuellement être transmis au terminal T pour affichage sur le terminal T d'une indication correspondante.

Lorsque l'égalité entre la réponse R reçue du terminal utilisateur T et la réponse attendue R' calculée par l'unité électronique de commande 11 est vérifiée à l'étape E118, on procède à l'étape E122 à laquelle l'unité électronique de commande effectue la fonctionnalité demandée, ici le déverrouillage des portes du véhicule, en émettant une commande correspondante à destination de l'actionneur 15 (ou, dans le cas du démarrage du véhicule, à l'actionneur 17).

Dans l'exemple qui vient d'être décrit, une authentification simple est utilisée ; on peut toutefois prévoir en variante d'utiliser une authentification mutuelle, par exemple lorsque la fonctionnalité souhaitée est le démarrage du véhicule.

La figure 5 présente les étapes principales d'un exemple de procédé de resynchronisation du compteur utilisé ci-dessus.

Une telle resynchronisation est nécessaire lorsqu'un défaut de fonctionnement est détecté ou que le service a été interrompu, ce qui est par exemple le cas lorsque l'alimentation fournie par la batterie a été perdue et qu'une nouvelle batterie est mise en place.

Le procédé décrit ici nécessite comme expliqué ci-dessous un échange de données entre le serveur 50 (référencé S en figure 5) et le véhicule 10 (référencé V en figure 5), ou plus précisément l'unité électronique de commande 11. Un tel échange de données est rendu possible comme indiqué ci-dessus soit via le terminal utilisateur 20 (selon les modalités déjà présentées en référence aux figures 1 à 3), soit en variante par un accès direct de l'unité électronique de commande 11 au réseau de téléphonie mobile 30.

Le procédé de la figure 5 est lancé lorsqu'un défaut est détecté (par exemple : perte d'alimentation de la batterie du véhicule 10, auquel cas le défaut est détecté à la reprise de l'alimentation) et éventuellement en outre lorsqu'un utilisateur du véhicule demande la remise en service de la possibilité de commande la fonctionnalité du véhicule au moyen du terminal utilisateur.

Ce procédé débute à l'étape E200 par l'émission par l'unité électronique de commande 11 d'une requête de synchronisation, éventuellement accompagnée d'un indicateur d'état du véhicule, à destination du serveur S.

À réception de cette requête, le serveur S génère un défi, par exemple nombre aléatoire RND" (étape E202).

Le serveur S calcule alors à l'étape E204 une réponse RESP" associée à ce défi RND" par application d'une fonction cryptographique f (par exemple celle utilisée lors de l'authentification mutuelle nécessaire à l'inscription comme expliqué ci-dessus en référence à la figure 2) utilisant la clé cryptographique PrK, ce que l'on peut écrire : RESP" = f(RND",PrK).

Le serveur S peut ainsi émettre à l'étape E206 le défi RND" et une partie de la réponse RESP", ici un mot de poids faible LSB" formant partie de la réponse RESP", à destination du véhicule V, précisément de l'unité électronique de commande 11.

L'unité électronique de commande 11 reçoit le défi RND" et la partie de réponse LSB et calcule à son tour à l'étape E208 la réponse RESP'" par application au défi RND" reçu de la fonction cryptographique f utilisant la clé cryptographique PrK mémorisée comme indiqué plus haut dans l'unité de mémorisation 14 : RESP'" = f(RND",PrK).

L'unité électronique de commande 11 vérifie alors à l'étape E210 que la partie LSB'" (correspondant à la partie de la réponse RESP" reçue, ici le mot de poids faible) de la réponse RESP'" calculée à l'étape E208 est bien égale à la partie de réponse LSB" reçue en provenance du serveur S.

Si cette égalité n'est pas vérifiée, l'unité électronique de commande 11 procède à l'étape E212 qui met fin au processus de resynchronisation.

Si l'égalité est vérifiée, l'unité électronique de commande 11 émet à l'étape E214 une autre partie de la réponse RESP'" calculée à l'étape E208, ici un mot de poids fort MSB'", à destination du serveur S.

Le serveur S reçoit cette autre partie MSB'" de la réponse RESP'" et vérifie à l'étape E216 que la partie MSB" (correspondant à la partie MSB'" de la réponse RESP'" reçue, ici le mot de poids fort) de la réponse RESP" calculée à l'étape E204 est bien égale à la partie de réponse MSB'" reçue en provenance de l'unité électronique de commande 11.

Si cette égalité n'est pas vérifiée, le serveur procède à l'étape E218 qui met fin au processeur de resynchronisation. En effet, cela signifie que le partenaire du serveur S dans la communication n'a pas été en mesure de calculer la réponse attendue, vraisemblablement du fait que le partenaire n'est pas le véhicule attendu et ne détient donc pas la clé cryptographique PrK.

En fonctionnement normal, l'égalité est vérifiée et une authentification mutuelle a ainsi été réalisée entre le serveur S et l'unité électronique de commande 11.

Le serveur S déclenche alors la poursuite du procédé de resynchronisation en émettant à destination de l'unité électronique de commande 11 (étape E220) une demande de communication de la valeur C_{V} du compteur mémorisé au sein de l'unité électronique de commande 11 et de son état (décompte en cours ou à l'arrêt).

L'unité électronique de commande 11 reçoit cette demande et émet par conséquent à l'étape E222 la valeur C_{V} du compteur et l'état du compteur (décompte en cours/à l'arrêt) à destination du serveur S.

Le serveur S reçoit ces informations et peut ainsi déterminer à l'étape E224 si le compteur est à l'arrêt ou si la valeur reçue Cv diffère de la valeur Cs du compteur mémorisé au sein du serveur S d'une différence supérieure à un seuil prédéterminé d (i.e. si |C_{V} - C_{S}| > d, où |x| est la valeur absolue de x).

Si aucune de ces conditions n'est vérifiée (c'est-à-dire lorsque l'état reçu indique un compteur actif et que la différence entre le compteur C_{S} mémorisé au sein du serveur et le compteur C_{V} mémorisé au sein de l'unité électronique de commande est acceptable), on considère qu'aucune resynchronisation n'est nécessaire et le procédé se poursuit directement à l'étape E230 décrite ci-dessous.

Si une de ces conditions est vérifiée (c'est-à-dire si le compteur est à l'arrêt ou si la valeur reçue C_{V} diffère de la valeur C_{S} du compteur mémorisé au sein du serveur S d'une différence supérieure au seuil prédéterminé d), le serveur S envoie (étape E226) à destination de l'unité électronique de commande une commande de réinitialisation du compteur à la valeur C_{S} (valeur courante du compteur mémorisé au sein du serveur S) et de lancement du compteur.

L'unité électronique de commande 11 reçoit cette commande et lance par conséquent à l'étape E228 le compteur qu'elle mémorise, après initialisation à la valeur reçue C_{S}. L'unité électronique de commande 11 émet alors un message de confirmation du lancement du compteur.

À réception de ce message de confirmation, le serveur S procède à l'étape E230 à laquelle est mis fin au procédé de resynchronisation. Le compteur est alors incrémenté parallèlement dans le serveur S et dans l'unité électronique de commande 11 du véhicule V, selon une incrémentation périodique à la période P, comme expliqué ci-dessus.

Selon une variante envisageable, on n'utilise pas pour la resynchronisation des valeurs transmises du serveur S à l'unité électronique de commande 11, mais les valeurs inscrites (valeur initiale I, période d'incrémentation P) dans l'unité de mémorisation 14 au cours de le production de l'unité électronique. Dans ce cas, à chaque synchronisation du serveur et de l'entité électronique, le compteur est initialisé avec la valeur initiale I mémorisée dans l'unité de mémorisation 14.

## Revendications

1. Unité électronique (11) destinée à équiper un véhicule (10 ; V) et conçue pour commander une fonctionnalité du véhicule (10) à réception d'une requête en provenance d'un terminal utilisateur (20 ; T), **caractérisée en ce qu'**elle comprend :
- une unité de mémorisation (14) comprenant des informations de construction d'un compteur, lesdites informations correspondant à une valeur initiale et une donnée représentative d'une durée de pas P, ledit compteur étant diversifié de sorte que les informations de construction dudit compteur diffèrent d'une unité électronique à l'autre;
- des moyens pour modifier périodiquement la valeur du compteur, avec une période égale à ladite durée ;
- des moyens de commande pour commander ladite fonctionnalité seulement lorsque le compteur est compris dans une plage de valeurs donnée.

2. Unité électronique selon la revendication 1, comprenant des moyens de réception d'une borne inférieure (NB1) et d'une borne supérieure (NB2), dans laquelle la plage de valeurs donnée est définie entre ladite borne inférieure (NB1) et ladite borne supérieure (NB2).

3. Unité électronique selon la revendication 2, comprenant des moyens de dérivation d'une clé virtuelle (VK) sur la base d'une clé racine et des bornes inférieure (NB1) et supérieure (NB2) reçues.

4. Unité électronique selon la revendication 3, comprenant :
- des moyens d'émission d'un défi (RND') à destination du terminal utilisateur (20 ; T) ;
- des moyens de calcul d'une réponse attendue en fonction de la clé virtuelle (VK) et du défi (RND') ;
- des moyens de réception d'une réponse (R) en provenance du terminal utilisateur (20 ; T) ;
dans laquelle les moyens de commande sont en outre conçus pour commander ladite fonctionnalité seulement lorsque la réponse reçue (R) correspond à la réponse attendue.

5. Unité électronique selon l'une des revendications 1 à 4, dans laquelle la modification périodique du compteur est une incrémentation périodique du compteur.

6. Unité électronique selon l'une des revendications 1 à 5, dans laquelle ladite fonctionnalité est le déverrouillage des portes du véhicule.

7. Procédé mis en œuvre dans une unité électronique conforme à l'une des revendications 1 à 6, comprenant les étapes suivantes :
- authentification mutuelle de l'unité électronique (11) et d'un serveur (50 ; S) ;
- en cas d'authentification mutuelle réussie, initialisation d'un compteur avec une valeur initiale I faisant partie des informations de construction mémorisées dans l'unité de mémorisation (14) de l'unité électronique.

8. Procédé selon la revendication 7, dans lequel l'initialisation du compteur est réalisée seulement en cas de détection d'une action d'un utilisateur sur un objet physique lié au véhicule.

9. Procédé de partage d'une base de temps entre un serveur (50 ; S) et une unité électronique (11) d'un véhicule (10 ; V) selon l'une quelconque des revendications 1 à 6, comprenant la mise en œuvre par l'unité électronique d'un procédé conforme à l'une des revendications 7 ou 8, et les étapes suivantes :
- initialisation (E40) d'un compteur au sein du serveur (50 ; S) avec une valeur initiale I faisant partie des informations de construction, émise en cas d'authentification mutuelle réussie, mémorisée au niveau du serveur (50 ; S) ;
- modification périodique du compteur mémorisé au sein du serveur (50 ; S) avec une période égale à ladite durée.

10. Procédé de synchronisation d'un serveur (50 ; S) et d'une unité électronique (11) conforme à l'une des revendications 1 à 6, comprenant les étapes suivantes :
- authentification mutuelle de l'unité électronique (11) et du serveur (50 ; S) ;
- en cas d'authentification mutuelle réussie, transmission, à l'unité électronique (11), d'une valeur courante d'un compteur mémorisé au niveau du serveur (50 ; S), et initialisation du compteur mémorisé dans l'unité de mémorisation (14) de l'unité électronique (11) avec ladite valeur courante.

11. Procédé de synchronisation d'un serveur (50 ; S) et d'une unité électronique (11) conforme à l'une des revendications 1 à 6, comprenant les étapes suivantes :
- inscription de la donnée représentative d'une durée et d'une valeur initiale dans l'unité de mémorisation (14) au cours d'une phase de production de l'unité électronique :
- à chaque synchronisation du serveur (50 ; S) et de l'entité électronique (11), initialisation du compteur avec ladite valeur initiale.

## Patentansprüche

1. Elektronikeinheit (11), welche zur Ausrüstung eines Fahrzeugs (10; V) bestimmt ist und dafür ausgelegt ist, bei Empfang einer von einem Benutzerendgerät (20; T) stammenden Anforderung eine Funktionalität des Fahrzeugs (10) zu steuern, **dadurch gekennzeichnet, dass** sie umfasst:
- eine Speichereinheit (14), die Konstruktionsinformationen eines Zählers umfasst, wobei diese Informationen einem Anfangswert und einer für eine Schrittdauer P repräsentativen Größe entsprechen, wobei der Zähler so diversifiziert ist, dass sich die Konstruktionsinformationen des Zählers von einer Elektronikeinheit zur anderen unterscheiden;
- Mittel zum periodischen Ändern des Wertes des Zählers mit einer Periode, die gleich der Schrittdauer ist;
- Steuerungsmittel zum Steuern der Funktionalität nur dann, wenn sich der Zähler in einem vorgegebenen Wertebereich befindet.

2. Elektronikeinheit nach Anspruch 1, welche Mittel zum Empfang einer unteren Grenze (NB1) und einer oberen Grenze (NB2) umfasst, wobei der vorgegebene Wertebereich zwischen der unteren Grenze (NB1) und der oberen Grenze (NB2) definiert ist.

3. Elektronikeinheit nach Anspruch 2, welche Mittel zur Ableitung eines virtuellen Schlüssels (VK) auf der Basis eines Root-Schlüssels und der empfangenen unteren (NB1) und oberen (NB2) Grenze umfasst.

4. Elektronikeinheit nach Anspruch 3, welche umfasst:
- Mittel zum Senden einer Challenge (RND') an das Benutzerendgerät (20; T);
- Mittel zur Berechnung einer erwarteten Response in Abhängigkeit von dem virtuellen Schlüssel (VK) und der Challenge (RND');
- Mittel zum Empfang einer Response (R) von dem Benutzerendgerät (20; T);
wobei die Steuerungsmittel außerdem dafür ausgelegt sind, die Funktionalität nur dann anzusteuern, wenn die empfangene Response (R) der erwarteten Response entspricht.

5. Elektronikeinheit nach einem der Ansprüche 1 bis 4, wobei die periodische Änderung des Zählers eine periodische Inkrementierung des Zählers ist.

6. Elektronikeinheit nach einem der Ansprüche 1 bis 5, wobei die Funktionalität das Entriegeln der Türen des Fahrzeugs ist.

7. Verfahren, welches in einer Elektronikeinheit gemäß einem der Ansprüche 1 bis 6 durchgeführt wird und die folgenden Schritte umfasst:
- gegenseitige Authentifizierung der Elektronikeinheit (11) und eines Servers (50; S);
- im Fall einer erfolgreichen gegenseitigen Authentifizierung, Initialisierung eines Zählers mit einem Anfangswert I, der Bestandteil der in der Speichereinheit (14) der Elektronikeinheit gespeicherten Konstruktionsinformationen ist.

8. Verfahren nach Anspruch 7, wobei die Initialisierung des Zählers nur im Fall der Erkennung einer Einwirkung eines Benutzers auf einen mit dem Fahrzeug verbundenen physischen Gegenstand durchgeführt wird.

9. Verfahren zur gemeinsamen Nutzung einer Zeitbasis durch einen Server (50; S) und eine Elektronikeinheit (11) eines Fahrzeugs (10; V) nach einem der Ansprüche 1 bis 6, welches die Durchführung eines Verfahrens gemäß einem der Ansprüche 7 oder 8 durch die Elektronikeinheit und die folgenden Schritte umfasst:
- Initialisierung (E40) eines Zählers innerhalb des Servers (50; S) mit einem Anfangswert I, der Bestandteil der Konstruktionsinformationen ist, im Fall einer erfolgreichen gegenseitigen Authentifizierung gesendet wird und am Server (50; S) gespeichert wird;
- periodische Änderung des im Server (50; S) gespeicherten Zählers mit einer Periode, die gleich der Schrittdauer ist.

10. Verfahren zur Synchronisation eines Servers (50; S) und einer Elektronikeinheit (11) gemäß einem der Ansprüche 1 bis 6, welches die folgenden Schritte umfasst:
- gegenseitige Authentifizierung der Elektronikeinheit (11) und des Servers (50; S);
- im Fall einer erfolgreichen gegenseitigen Authentifizierung, Übertragung, an die Elektronikeinheit (11), eines aktuellen Wertes eines am Server (50; S) gespeicherten Zählers und Initialisierung des Zählers, der in der Speichereinheit (14) der Elektronikeinheit (11) gespeichert ist, mit dem aktuellen Wert.

11. Verfahren zur Synchronisation eines Servers (50; S) und einer Elektronikeinheit (11) gemäß einem der Ansprüche 1 bis 6, welches die folgenden Schritte umfasst:
- Einschreiben der für eine Schrittdauer repräsentativen Größe und eines Anfangswertes in die Speichereinheit (14) während einer Herstellungsphase der Elektronikeinheit;
- bei jeder Synchronisation des Servers (50; S) und der Elektronikentität (11), Initialisierung des Zählers mit dem Anfangswert.

## Claims

1. Electronic unit (11), which is intended to be provided in a vehicle (10; V) and is designed to control a function of the vehicle (10) on receiving a request from a user terminal (20; T), **characterized in that** it comprises:
- a storage unit (14), which comprises construction information for constructing a counter, said information corresponding to an initial value and a datum representative of a step duration P, said counter being diversified such that the construction information for constructing said counter differs from one electronic unit to the next;
- means for periodically changing the value of the counter, with a period equal to said duration;
- control means for controlling said function only when the counter is within a given range of values.

2. Electronic unit according to Claim 1, comprising means for receiving a lower limit (NB1) and an upper limit (NB2), wherein the given range of values is defined between said lower limit (NB1) and said upper limit (NB2) .

3. Electronic unit according to Claim 2, comprising means for deriving a virtual key (VK) on the basis of a root key and the received lower limit (NB1) and upper limit (NB2).

4. Electronic unit according to Claim 3, comprising:
- means for sending a challenge (RND') to the user terminal (20; T) ;
- means for computing an expected response on the basis of the virtual key (VK) and the challenge (RND');
- means for receiving a response (R) from the user terminal (20; T);
wherein the control means are further designed to control said function only when the received response (R) corresponds to the expected response.

5. Electronic unit according to one of Claims 1 to 4, wherein the periodic changing of the counter is a periodic incrementation of the counter.

6. Electronic unit according to one of Claims 1 to 5, wherein said function is unlocking the vehicle doors.

7. Method implemented in an electronic unit in accordance with one of Claims 1 to 6, comprising the following steps:
- performing mutual authentication of the electronic unit (11) and of a server (50; S);
- if the mutual authentication is successful, initializing a counter with an initial value I that is included in the construction information stored in the storage unit (14) of the electronic unit.

8. Method according to Claim 7, wherein the counter is initialized only if an action of a user on a physical object linked to the vehicle is detected.

9. Method for sharing a time base between a server (50; S) and an electronic unit (11) of a vehicle (10; V) according to any one of Claims 1 to 6, comprising the implementation, by the electronic unit, of a method in accordance with either of Claims 7 and 8, and the following steps:
- initializing (E40) a counter within the server (50; S) with an initial value I that is included in the construction information, is sent if mutual authentication is successful and is stored at the server (50; S);
- periodically changing the counter stored within the server (50; S), with a period equal to said duration.

10. Method for synchronizing a server (50; S) and an electronic unit (11) in accordance with one of Claims 1 to 6, comprising the following steps:
- performing mutual authentication of the electronic unit (11) and of the server (50; S);
- if the mutual authentication is successful, transmitting, to the electronic unit (11), a current value of a counter stored at the server (50; S), and initializing the counter stored in the storage unit (14) of the electronic unit (11) with said current value.

11. Method for synchronizing a server (50; S) and an electronic unit (11) in accordance with one of Claims 1 to 6, comprising the following steps:
- writing the datum representative of a duration and an initial value to the storage unit (14) during a phase of production of the electronic unit;
- on each synchronization of the server (50; S) and of the electronic entity (11), initializing the counter with said initial value.
